# EUROPÄISCHE PATENTSCHRIFT

(11) **EP 2 284 632 B1**
(45) Veröffentlichungstag und Bekanntmachung des Hinweises auf die Patenterteilung: **18.03.2015**
(21) Anmeldenummer: 09009344.4
(22) Anmeldetag: 17.07.2009
(51) Int. Cl.: G05B 19/042

(54) **Verfahren zur Steuerung eines Datenaustauschs zwischen einem Fahrzeugdiagnosesystem und in Fahrzeugen angeordneten Steuerungsgeräten, Steuerungsprogramm und Fahrzeugdiagnosesystem**
Method for controlling a data exchange between a vehicle diagnosis system and control devices of vehicles, control program and vehicle diagnosis system
Procédé de commande d'un échange de données entre un système de diagnostic de véhicule et appareils de commande agencés dans des véhicules, programme de commande et système de diagnostic de véhicule

(43) Veröffentlichungstag der Anmeldung: 16.02.2011
(73) Patentinhaber: Siemens Aktiengesellschaft, 80333 München (DE)
(72) Erfinder: Köhler, Ralf, 67160 Wissembourg (FR)

(56) Entgegenhaltungen:
- EP-A- 1 868 145
- WO-A-2005/109135
- DE-A1-102006 019 972
- US-A1- 2004 103 121
- US-A1- 2006 143 173
- US-A1- 2007 028 219
- US-A1- 2008 249 681

## Beschreibung

Bisherige Fahrzeugdiagnosesysteme, mit denen herstellerseitig oder in einer Werkstatt auf Steuerungsgeräteparameter eines Fahrzeugs zugegriffen werden kann, sind relativ starr an bestehende Fahrzeugkommunikationsschnittstellen gekoppelt. Bei Änderungen oder Erweiterungen von Fahrzeugkommunikationsschnittstellen infolge eines Modellwechsels oder aufgrund einer neuen Fahrzeugyariante sind häufig umfangreiche Anpassungsarbeiten am gesamten Fahrzeugdiagnosesystem erforderlich.

Ein weiteres Problem einer starren Kopplung zwischen Funktionen oder Prüfprogrammen von Fahrzeugdiagnosesystem und Fahrzeugkommunikationsschnittstellen liegt darin, daß eine Optimierung von Kommunikationszugriffen, insbesondere zur Laufzeit, vielfach nicht möglich ist. Eine Optimierung von Kommunikationszugriffen umfaßt beispielsweise eine Festlegung einer Reihenfolge für Kommunikationsaufrufe. Üblicherweise erfolgt eine Festlegung von möglichen Kommunikationszugriffen bereits bei einer Entwicklung eines Fahrzeugdiagnosesystems, die sämtliche zur Laufzeit eintretende Szenarien berücksichtigen muß. Nachträgliche Änderungen der möglichen Kommunikationszugriffe sind äußerst aufwendig und in einigen Fällen wirtschaftlich nicht mehr sinnvoll.

Aus US 2008/249681 A1 ist bekannt, Fahrzeugdiagnosedaten von einem Diagnosewerkzeug zur weiteren Auswertung an einen PC übertragen. Von einer Fahrzeugkommunikationsschnittstelle empfangene Meßsignale werden einer Protokollumwandlung unterzogen, die sich rein auf ISO/OSI-Layer 1 und 2 bezieht. Ein Bezug zu computerbasierten Objekten, die auf Applikationsebene verwendet werden, wird dabei nicht hergestellt. Nachteilig ist somit, daß keine Trennung zwischen von durch Funktionen oder Prüfprogramme eines Fahrzeugdiagnosesystems genutzten computerbasierten Objekten einerseits und Hardwareeigenschaften von Fahrzeugschnittstellen oder zu überwachende Steuerungsgeräten andererseits erfolgt. Eine geänderte Fahrzeugschnittstellen- oder Steuerungsgerätehardware erfordert also immer eine tiefgreifende Änderung von Funktionen oder Prüfprogrammen des Fahrzeugdiagnosesystems, Dies ist äußerst zeit- und kostenaufwendig sowie fehleranfällig. Insbesondere geht aus US 2008/249681 A1 nicht hervor, daß eine Befehlsschnittstelle einer Kommunikationssteuerungseinheit eines Fahrzeugdiagnosesystems anhand von Zuordnungen zwischen computerbasierten Objekten und Steuerungsgeräteparametern eine minimierte Anzahl von für einen Steuerungsgeräteparameterzugriff erforderlichen Kommunikationsaufrufen ermittelt.

Der vorliegenden Erfindung liegt daher die Aufgabe zugrunde, ein effizientes und flexibles Verfahren zur Steuerung eines Datenaustauschs zwischen einem Fahrzeugdiagnosesystem und Steuerungsgeräten anzugeben, das eine Wiederverwertung von bestehenden Prüfprogrammen oder Diagnosefunktionen bei geänderten Steuerungsgeräten oder Fahrzeugschnittstellen sowie eine Optimierung von Kommunikationszugriffen über Fahrzeugschnittstellen zur Laufzeit des Fahrzeugdiagnosesystems ermöglicht, sowie eine geeignete Implementierung des Verfahrens zu schaffen.

Diese Aufgabe wird erfindungsgemäß durch ein Verfahren mit den in Anspruch 1 angegebenen Merkmalen, ein Steuerungsprogramm mit den in Anspruch 7 angegebenen Merkmalen und ein Fahrzeugdiagnosesystem mit den in Anspruch 8 angegebenen Merkmalen gelöst. Vorteilhafte Weiterbildungen der vorliegenden Erfindung sind in den abhängigen Ansprüchen angegeben.

Erfindungsgemäß wird zur Steuerung eines Datenaustauschs zwischen einem Fahrzeugdiagnosesystem und in Fahrzeugen angeordneten Steuerungsgeräten eine Zugriffsanforderung für zumindest einen ausgewählten Steuerungsgeräteparameter an eine Befehlsschnittstelle übermittelt. Der ausgewählte Steuerungsgeräteparameter ist in einem Steuerungsgerät speicherbar. Die Zugriffsanforderung umfaßt zumindest eine Angabe eines Steuerungsbefehls und eines computerbasierten Objekts des Fahrzeugdiagnosesystems. Das computerbasierte Objekt, beispielsweise eine von einer Funktion oder einem Prüfprogramm des Fahrzeugdiagnosesystems genutzte variable, ist einem Steuerungsgeräteparameter zugeordnet. Der Steuerungsgeräteparameter muß einer Funktion oder einem Prüfprogramm des Fahrzeugdiagnosesystems damit nicht direkt bekannt sein, sondern kann beispielsweise durch eine Variable abstrahiert werden. Darüber hinaus sind computerbasierte Objekte des Fahrzeugdiagnosesystems mittels Datenstrukturelementen in vorgebbare Kategorien gegliedert. Datenstrukturelemente können beispielsweise Metainformationen sein.

In einer Datenbasis sind des weiteren den computerbasierten Objekten oder Datenstrukturelementen zugeordnete fahrzeugschnittstellen- bzw. steuerungsgerätespezifische Zugriffsparameter gespeichert. Durch die Befehlsschnittstelle werden Zugriffsanforderungen damit in fahrzeugschnittstellen- bzw. steuerungsgerätespezifische Zugriffsparameter umgesetzt. Anhand zumindest eines fahrzeugschnittstellen- bzw. steuerungsgerätespezifischen Zugriffsparameters für einen Zugriff auf den ausgewählten Steuerungsgeräteparameter erfolgt eine Ermittlung zumindest einer erforderlichen Kommunikationsressource einer Fahrzeugschnittstelle bzw. eines erforderlichen Kommunikationsaufrufs über die Fahrzeugschnittstelle. Der Zugriff auf den ausgewählten Steuerungsgeräteparameter erfolgt mittels der ermittelten Kommunikationsressource bzw. des ermittelten Kommunikationsaufrufs über die Fahrzeugschnittstelle.

Aufgrund einer Abbildung von Steuerungsgeräteparametern im Fahrzeugdiagnosesystem durch abstrakte Variablen sowie durch eine Unterteilung in fahrzeugschnittstellen- bzw. steuerungsgerätespezifische Schnittstellenkomponenten einerseits und funktions- bzw. prüfprogrammspezifische Schnittstellenkomponenten andererseits wird erfindungsgemäß eine vereinfachte Verwendung unterschiedlicher Fahrzeugschnittstellen und eine Optimierung von Kommunikationszugriffen zur Laufzeit ermöglicht.

Die vorliegende Erfindung wird nachfolgend an einem Ausführungsbeispiel anhand der Figur näher erläutert. Es zeigt
- Figur 1: eine schematische Darstellung eines Fahrzeugdiagnosesystems,
- Figur 2: ein Ablaufdiagramm für ein Verfahren zur Steuerung eines Datenaustauschs zwischen einem Fahrzeugdiagnosesystem und in einem Fahrzeug angeordneten Steuerungsgeräten.

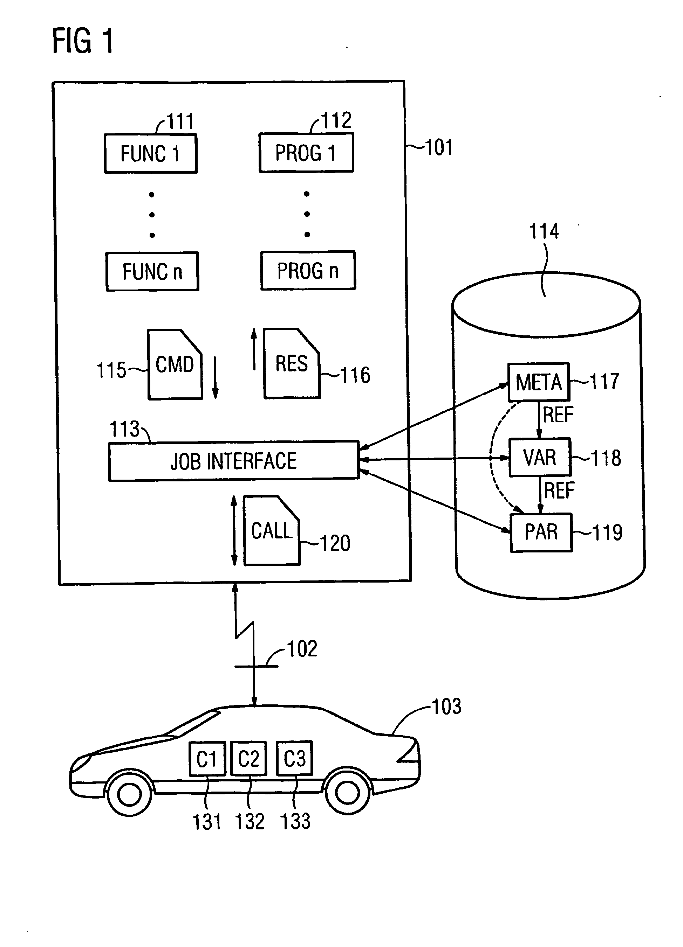

Das in Figur 1 dargestellte Fahrzeugdiagnosesystem 101 umfaßt eine Ablaufsteuerungseinrichtung für Funktionen 111 und Prüfprogramme 112. Außerdem ist eine Kommunikationssteuerungseinheit zur Bereitstellung einer Befehlsschnittstelle 113 für die Funktionen 111 und Prüfprogramme 112 vorgesehen. Dem Fahrzeugdiagnosesystem 101 ist außerdem eine Datenbasis 114 zugeordnet, in der durch Datenstrukturelemente 117 verwaltete Variablen 118 gespeichert sind, die von den Funktionen 111 und Prüfprogrammen 112 verwendet werden. Dabei dienen die Datenstrukturelemente 117 zur Gliederung der Variablen 118 in vorgebbare Kategorien. Des weiteren sind in der Datenbasis 114 fahrzeugschnittstellen- und steuerungsgerätespezifische Zugriffsparameter 119 gespeichert, die aus zugeordneten Variablen 118 oder Datenstrukturelementen 117 (durch gestrichelte Linie angedeutet) referenziert werden können. Die Datenstrukturelemente 117 sind fest vorgegeben und unabhängig von fahrzeugschnittstellen- oder steuerungsgerätesspezifischen Zugriffsparametern 119.

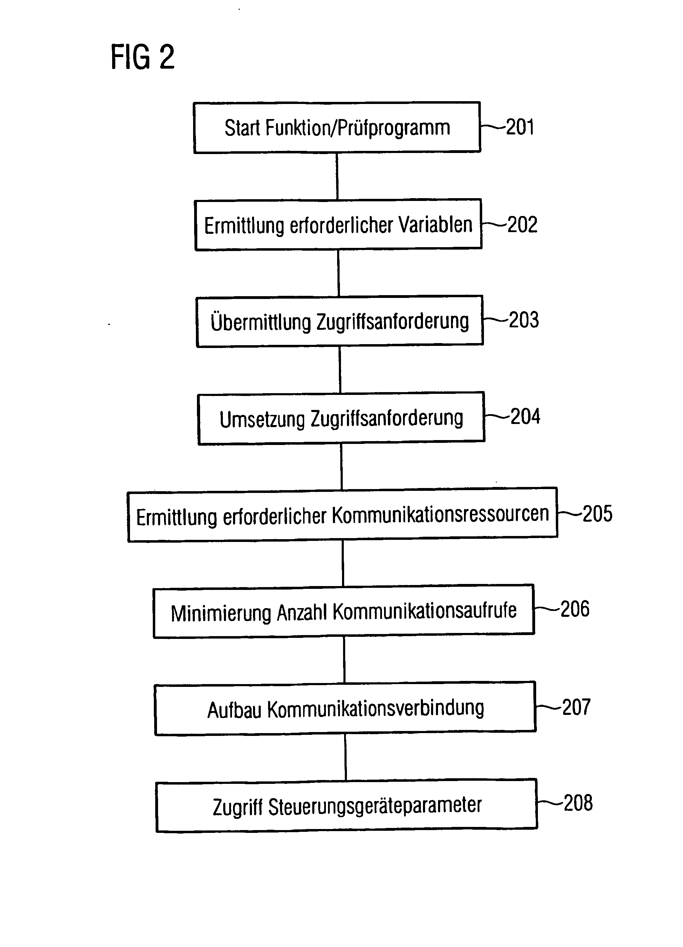

Bei einem Start einer Funktion 111 oder eines Prüfprogramms 112 entsprechend Schritt 201 des in Figur 2 dargestellten Ablaufdiagramms werden anhand der Datenstrukturelemente 117 für die Funktion 111 oder das Prüfprogramm 112 erforderliche Variablen 118 ermittelt (Schritt 202). Anschließend wird in Schritt 203 eine Zugriffsanforderung 115 für ausgewählte Steuerungsgeräteparameter, die den ermittelten Variablen 118 zugeordnet und in Steuerungsgeräten 131-133 eines zu prüfenden oder einzustellenden Fahrzeugs 103 gespeichert sind, durch die jeweilige Funktion 111 oder das jeweilige Prüfprogramm 112 an die Befehlsschnittstelle 113 übermittelt. Die Zugriffsanforderung 115 umfaßt einen Namen eines von der Befehlsschnittstelle 113 umzusetzenden Steuerungsbefehls und Referenzen auf die zu ermittelnden Variablen 118.

Die Zugriffsanforderung 115 wird gemäß Schritt 204 durch die Befehlsschnittstelle 113 in fahrzeugschnittstellen- und steuerungsgerätespezifische Zugriffsparameter 119 umgesetzt. Anhand der fahrzeugschnittstellen- und steuerungsgerätespezifischen Zugriffsparameter 119 werden für einen Zugriff auf die ausgewählten Steuerungsgeräteparameter erforderliche Kommunikationsressourcen einer Fahrzeugschnittstelle 102 und erforderliche spezifische Kommunikationsaufrufe 120 über die Fahrzeugschnittstelle 102 ermittelt (Schritt 205). Anhand von in der Datenbasis 114 abgebildeten Zuordnungen zwischen den ermittelten Variablen 118 und den ausgewählten Steuerungsgeräteparametern wird dabei durch die Befehlsschnittstelle 113 eine Anzahl von für einen Steuerungsgeräteparameterzugriff erforderlichen Kommunikationsaufrufen 120 ermittelt. Diese Anzahl erforderlicher Kommunikationsaufrufe 120 wird in Schritt 206 entsprechend einem vorgebbaren Optimierungsansatz minimiert.

Über die ermittelten Kommunikationsressourcen der Fahrzeugschnittstelle 102 und anhand der ermittelten Kommunikationsaufrufe 120 wird eine Kommunikationsverbindung zwischen dem Fahrzeugdiagnosesystem 101 und dem zu prüfenden oder einzustellenden Fahrzeug 103 aufgebaut (Schritt 208). Anschließend erfolgt der Zugriff auf die ausgewählten Steuerungsgeräteparameter(Schritt 208). Auf den Zugriff übermittelte Rückmeldungen der Steuerungsgeräte 131-133 an das Fahrzeugdiagnosesystem 101 werden durch die Befehlsschnittstelle 113 in Ergebnismeldungen 116 umgesetzt, die den ermittelten Variablen 118 zugeordnet sind. Neben einem Zugriff auf Steuerungsgeräteparameter über die Befehlsschnittstelle 113 ist auch ein direkter Zugriff auf die Fahrzeugsschnittstelle 102 durch Funktionen 111 oder Prüfprogramme 112 des Fahrzeugdiagnosesystems 101 unter Umgehung der Befehlsschnittstelle 101 möglich.

Das vorangehend beschriebene Verfahren wird bevorzugt durch ein Steuerungsprogramm implementiert, das in einen Arbeitsspeicher einer Rechnereinheit ladbar ist. Das Steuerungsprogramm weist zumindest einen Codeabschnitt auf, bei dessen Ausführung die Schritte des beschriebenen Verfahrens durchgeführt werden, wenn das Steuerungsprogramm in der Rechnereinheit abläuft.

Darüber hinaus ermöglicht das beschriebene Verfahren ein kontextloses Testen von Parameterzugriffen. Über eine Testfunktion können sämtliche Steuerungsgerätezugriffe getestet werden, ohne Standardfunktionen und Prüfprogramme des Fahrzeugdiagnosesystems zu verwenden. Nach einer Aktualisierung oder Anpassung von fahrzeugschnittstellen- oder steuerungsgerätespezifischen Zugriffsparametern können Test zur Kontrolle der Zugriffsparameter wiederholt werden.

Variablen für Standardfunktionen, beispielsweise Status lesen oder Fahrzeugkonfiguration lesen oder schreiben, werden üblicherweise in festen Strukturen verwaltet. Zusätzlich können Variablen aber auch unter anderen Aspekten in vorgebbare Kategorien gegliedert werden. Eine derartige Gliederung oder Gruppierung kann ohne Bezug auf verwendete Hardware applikationsspezifisch bei einer Erstellung von Prüfprogrammen vorgenommen werden. Damit können individuelle Kundenwünsche realisiert werden. Außerdem ergibt sich eine Effizienzverbesserung bei der Erstellung von Prüfprogrammen. In einer Entwicklungsumgebung für Prüfprogramme können darüber hinaus Hilfsfunktionen bereitgestellt werden, die einen lesenden oder schreibenden Zugriff auf eine in einem Prüfprogramm verwendete Variable in nur einen Arbeitsschritt ermöglichen, beispielsweise per Drag and Drop.

Da Verhalten und Identität einer Variablen vorzugsweise unverändert bleiben, weisen Prüfprogramme feste Bezüge auf, die beispielsweise von Kommunikationsschnittstelleneigenschaften, Steuerungsgerätefirmware oder Funktionserweiterungen an elektronischen Komponenten unabhängig sind. Derartige Prüfprogramme sind sehr wartungsfreundlich. Anpassungen in einem Prüfprogramm sind grundsätzlich nur dann erforderlich, wenn eine Variable einen Steuerungsgeräteparameter referenziert, der in einer neuen Steuerungsgeräteversion nicht mehr existiert.

Werden durch eine Funktion oder eine Prüfprogramm des Fahrzeugdiagnosesystems mehrere Variablen gleichzeitig angefragt, kann ein Auslesen zugeordneter Steuerungsgeräteparameter durch eine Ablauflogik optimiert werden. Vielfach werden mit einem Kommunikationsaufruf mehrere Steuerungsgeräteparameter gelesen oder geschrieben. Werden fahrzeugschnittstellen- oder steuerungsgerätespezifische Zugriffsparameter aus Datenstrukturelementen referenziert, können anhand der Datenstrukturelemente Gruppierungsmöglichkeiten ermittelt werden. Auf diese Weise kann eine Anzahl von Kommunikationsaufrufen über eine Fahrzeugschnittstelle minimiert werden.

Das vorangehend beschriebene Fahrzeugdiagnosesystem ermöglicht eine Optimierung von Zugriffszeiten bei einem Lesen bzw. Schreiben von Steuerungsgeräteparametern. Bei einer Entwicklung und Erweiterung eines Fahrzeugdiagnosesystems können über einen einheitlichen Ansatz sämtliche Kommunikationszugriffe zeitoptimiert werden. Eine funktionsbezogene Optimierung ist damit nicht mehr unbedingt erforderlich. Somit können Entwicklungs- und Systemtestzeiten verkürzt werden.

Des weiteren können bei einer Erstellung von Diagnosetests definierte Menge an Variablen zusammengestellt werden, deren zugeordnete Steuerungsgeräteparameter ohne Kenntnis spezifischer Kommunikationsaufrufe ausgelesen werden können. Ein Auslesen wird dabei implizit optimiert ausgeführt. Sind insbesondere anhand der Datenstrukturelemente sämtliche auszulesenden oder zu schreibenden Steuerungsgeräteparameter bekannt, können Kommunikationsaufrufe zur Zugriffszeitoptimierung parallelisiert werden. Für eine weitere Optimierung können Leistungsdaten von Kommunikationsschnittstellen zur Laufzeit ermittelt und zur Planung von Kommunikationsaufrufen verwendet werden.

Die Anwendung der vorliegenden Erfindung ist nicht auf das beschriebene Ausführungsbeispiel beschränkt.

## Patentansprüche

1. Verfahren zur Steuerung eines Datenaustauschs zwischen einem Fahrzeugdiagnosesystem und in Fahrzeugen angeordneten Steuerungsgeräten, bei dem
- eine Zugriffsanforderung (115) für zumindest einen ausgewählten Steuerungsgeräteparameter, der in einem Steuerungsgerät (131-133) eines Fahrzeugs speicherbar ist, an eine Befehleschnittstelle (113) einer Kommunikationssteuerungseinheit des Fahrzeugdiagnosesystems (101) übermittelt wird,
wobei die Zugriffsanforderung von einer Funktion oder einem Prüfprogramm des Fahrzeugdiagnosesystems an die Befehlsschnittstelle übermittelt wird,
wobei das Fahrzeugdiagnosesystem (101) eine Ablaufsteuerungseinrichtung für Funktionen (111) und/oder Prüfprogramme (112) umfaßt,
wobei die Zugriffsanforderung (115) zumindest eine Angabe eines Steuerungsbefehls und eines von einer Funktion (111) und/oder von einem Prüfprogramm (112) genutzten computerbasierten Objekts (118) des Fahrzeugdiagnosesystems (101) umfaßt,
wobei das computerbasierte Objekt (118) einem Steuerungsgeräteparameter zugeordnet ist,
wobei computerbasierte Objekte (118) des Fahrzeugdiagnosesystems (101) mittels Datenstrukturelementen (117) in vorgebbare Kategorien gegliedert sind und
wobei den computerbasierten Objekten (118) oder Datenstrukturelementen (117) zugeordnete fahrzeugschnittstellen- und steuerungsgerätespezifische Zugriffsparameter (119) in einer Datenbasis (114) gespeichert sind,
- zugriffsanforderungen (115) durch die Befehlsschnittstelle (113) in fahrzeugschnittstellen- und steuerungsgerätespezifische Zugriffsparameter (119) umgesetzt werden,
- anhand zumindest eines fahrzeugschnittstellen- und steuerungsgerätespezifischen Zugriffsparameters (119) für einen Zugriff auf den ausgewählten Steuerungsgeräteparameter zumindest eine erforderliche Kommunikationsressource einer Fahrzeugschnittetelle (102) und ein erforderlicher Kommunikationsaufruf (120) über die Fahrzeugschnittstelle (102) ermittelt werden,
- der Zugriff auf den ausgewählten Steuerungsgeräteparameter mittels der ermittelten Kommunikationsressource und des ermittelten Kommunikationsaufrufs (120) über die Fahrzeugschnittstelle (102) erfolgt, wobei eine Rückmeldung eines Steuerungsgeräts des Fahrzeugs an das Fahrzeugdiagnosesystem durch die Befehlsschnittstelle in zumindest ein computerbasiertes Objekt des Fahrzeugdiagnosesystems umgesetzt wird,
- anhand von Zuordnungen zwischen computerbasierten Objekten (118) und Steuerungsgeräteparametern eine minimierte Anzahl von für einen Steuerungsgeräteparameterzugriff erforderlichen Kommunikationsaufrufen (120) durch die Befehlsnchnittstelle (113)ermittelt wird.

2. Verfahren nach Anspruch 1,
bei dem ein computerbasiertes Objekt eine von einer Funktion oder von einem Prüfprogramm des Fahrzeugdiagnosesystems verwendete Variable ist.

3. Verfahren nach einem der Ansprüche 1 bis 2,
bei dem die Datenstrukturelemente fest vorgegeben und unabhängig von fahrzeugschnittstellen- und steuerungsgerätesspezifischen Zugriffsparametern sind.

4. Verfahren nach Anspruch 3,
bei dem die Datenstrukturelemente Metainformationen sind.

5. Verfahren nach einem der Ansprüche 1 bis 4,
bei dem fahrzeugschnittstellen- und steuerungsgerätespezifische Zugriffsparameter aus zugeordneten computerbasierten Objekten oder Datenstrukturelementen referenziert werden.

6. Verfahren nach einem der Ansprüche 1 bis 5,
bei dem für eine Funktion oder ein Prüfprogramm des Fahrzeugdiagnosesystems erforderliche computerbasierte Objekte anhand der Datenstrukturelemente ermittelt werden.

7. Steuerungsprogramm, das in einen Arbeitsspeicher einer Rechnereinheit ladbar ist und zumindest einen Codeabschnitt aufweist, bei dessen Ausführung ein Verfahren nach einem der Ansprüche 1 bis 6 durchgeführt wird, wenn das Steuerungsprogramm in der Rechnereinheit abläuft.

8. Fahrzeugdiagnosesystem mit
- einer Ablaufsteuerungseinrichtung für Funktionen (111) und/oder Prüfprogramme (112),
- einer Kommunikationssteuerungseinheit zur Bereitstellung einer Befehlsschnittstelle (113) für Funktionen (111) und/oder Prüfprogramme (112),
- Mitteln zur Übermittlung einer Zugriffsanforderung (115) für zumindest einen ausgewählten Steuerungsgeräteparameter, der in einem Fahrzeugsteuerungsgerät (131-133) eines Fahrzeugs speicherbar ist, an die Befehlsschnittstelle (113), wobei die Zugriffsanforderung (115) zumindest eine Angabe eines Steuerungsbefehls und eine Angabe eines von einer Funktion (111) und/oder von einem Prüfprogramm (112) genutzten computerbasierten Objekts (118) des Fahrzeugdiagnosesystems (101) umfaßt,
- Mitteln zur Zuordnung des computerbasierten Objekts (118) zu einem Steuerungsgeräteparameter,
- Datenstrukturelementen (117) zur Gliederung von computerbasierten Objekten (118) des Fahrzeugdiagnosesystems (101) in vorgebbare Kategorien,
- einer Datenbasis (114) zur Speicherung von fahrzeugschnittstellen- und steuerungsgerätespezifischen Zugriffsparametern (119), die den computerbasierten Objekten (118) oder Datenstrukturelementen (117) zugeordnet sind,
- von der Befehlsschnittstelle (113) umfaßten Mitteln zur Umsetzung von Zugriffsanforderungen (115) in fahrzeugschnittstellen- und steuerungsgerätespezifische Zugriffsparameter (119), wobei eine Rückmeldung eines Steuerungsgeräts des Fahrzeugs an das Fahrzeugdiagnosesystem durch die Befehlsschnittstelle in zumindest ein computerbasiertes Objekt des Fahrzeugdiagnosesystems umgesetzt wird,
- Mitteln zur Ermittlung zumindest einer erforderlichen Kommunikationsressource einer Fahrzeugschnittstelle (102) und eines erforderlichen Kommunikationsaufrufs (120) über die Fahrzeugschnittstelle (102) anhand zumindest eines fahrzeugschnittstellen- und steuerungsgerätespezifischen Zugriffsparameters (119) für einen Zugriff auf den ausgewählten Steuerungsgeräteparameter, wobei der Zugriff auf den ausgewählten Steuerungsgeräteparameter mittels der ermittelten Kommunikationsressource und des ermittelten Kommunikationsaufrufs (120) über die Fahrzeugschnittstelle (102) erfolgt,
- von der Befehlsschnittstelle (113) umfaßten Mitteln zur Ermittlung einer minimierten Anzahl von für einen Steuerungsgeräteparameterzugriff erforderlichen Kommunikationsaufrufen (120) anhand von Zuordnungen zwischen computerbasierten Objekten (118) und Steuerungsgeräteparametern.

## Claims

1. Method for controlling data interchange between a vehicle diagnosis system and controllers arranged in vehicles, in which
- an access request (115) for at least one selected controller parameter that can be stored in a controller (131 - 133) of a vehicle is transmitted to a command interface (113) of a communication control unit of the vehicle diagnosis system (101),
wherein the access request is transmitted to the command interface by a function or a test program of the vehicle diagnosis system,
wherein the vehicle diagnosis system (101) comprises a flow control device for functions (111) and/or test programs (112),
wherein the access request (115) comprises at least an indication of a control command and of a computer-based object (118) - used by a function (111) and/or by a test program (112) - of the vehicle diagnosis system (101),
wherein the computer-based object (118) is associated with a controller parameter,
wherein computer-based objects (118) of the vehicle diagnosis system (101) are organized into prescribable categories by means of data structure elements (117), and
wherein vehicle-interface-specific and controller-specific access parameters (119) associated with the computer-based objects (118) or data structure elements (117) are stored in a database (114),
- access requests (115) are converted into vehicle-interface-specific and controller-specific access parameters (119) by the command interface (113),
- at least one vehicle-interface-specific and controller-specific access parameter (119) for accessing the selected controller parameter is used to ascertain at least a required communication resource of a vehicle interface (102) and a required communication call (120) via the vehicle interface (102),
- the selected controller parameter is accessed by means of the ascertained communication resource and the ascertained communication call (120) via the vehicle interface (102), wherein an acknowledgement from a controller of the vehicle to the vehicle diagnosis system is converted into at least one computer-based object of the vehicle diagnosis system by the command interface,
- associations between computer-based objects (118) and controller parameters are used by the command interface (113) to ascertain a minimized number of communication calls (120) required for controller parameter access.

2. Method according to Claim 1,
in which a computer-based object is a variable used by a function or by a test program of the vehicle diagnosis system.

3. Method according to either of Claims 1 and 2,
in which the data structure elements are firmly prescribed and independent of vehicle-interface-specific and controller-specific access parameters.

4. Method according to Claim 3,
in which the data structure elements are meta information.

5. Method according to one of Claims 1 to 4,
in which vehicle-interface-specific and controller-specific access parameters are referenced from associated computer-based objects or data structure elements.

6. Method according to one of Claims 1 to 5,
in which computer-based objects required for a function or a test program of the vehicle diagnosis system are ascertained from the data structure elements.

7. Control program that can be loaded into a main memory of a computer unit and has at least one code section that, when executed, prompts performance of a method according to one of Claims 1 to 6 when the control program runs in the computer unit.

8. Vehicle diagnosis system having
- a flow control device for functions (111) and/or test programs (112),
- a communication control unit for providing a command interface (113) for functions (111) and/or test programs (112),
- means for transmitting an access request (115) for at least one selected controller parameter that can be stored in a vehicle controller (131 - 133) of a vehicle to the command interface (113), wherein the access request (115) comprises at least an indication of a control command and an indication of a computer-based object (118) - used by a function (111) and/or by a test program (112) - of the vehicle diagnosis system (101),
- means for associating the computer-based object (118) with a controller parameter,
- data structure elements (117) for organizing computer-based objects (118) of the vehicle diagnosis system (101) into prescribable categories,
- a database (114) for storing vehicle-interface-specific and controller-specific access parameters (119) that are associated with the computer-based objects (118) or data structure elements (117),
- means that the command interface (113) comprises for converting access requests (115) into vehicle-interface-specific and controller-specific access parameters (119), wherein an acknowledgement from a controller of the vehicle to the vehicle diagnosis system is converted into at least one computer-based object of the vehicle diagnosis system by the command interface,
- means for ascertaining at least a required communication resource of a vehicle interface (102) and a required communication call (120) via the vehicle interface (102) using at least one vehicle-interface-specific and controller-specific access parameter (119) for accessing the selected controller parameter, wherein the selected controller parameter is accessed by means of the ascertained communication resource and the ascertained communication call (120) via the vehicle interface (102),
- means that the command interface (113) comprises for ascertaining a minimized number of communication calls (120) required for controller parameter access using associations between computer-based objects (118) and controller parameters.

## Revendications

1. Procédé de commande d'un échange de données entre un système de diagnostic d'un véhicule et des appareils de commande montés dans des véhicules, dans lequel
- on transmet une demande ( 115 ) d'accès à au moins un paramètre d'appareil de commande sélectionné, qui peut être mémorisée dans un appareil ( 131 à 133 ) de commande d'un véhicule, à une interface ( 113 ) d'instructions d'une unité de commande de communication du système ( 101 ) de diagnostic de véhicule,
la demande d'accès étant transmise par une fonction ou par un programme de contrôle du système de diagnostic du véhicule à l'interface d'instructions,
le système ( 101 ) de diagnostic de véhicule comprenant un dispositif de commande de déroulement de fonctions ( 111 ) et/ou de programmes ( 112 ) de contrôle,
la demande (115 ) d'accès comprenant au moins une indication d'une instruction de commande et un objet ( 118 ) informatisé du système ( 101 ) de diagnostic de véhicule utilisé par une fonction ( 111 ) ou par un programme ( 112 ) de contrôle,
l'objet ( 118 ) informatisé étant associé à un paramètre d'appareil de commande,
l'objet ( 118 ) informatisé du système ( 101 ) de diagnostic de véhicule étant subdivisé au moyen d'éléments ( 117 ) de structure de données en des catégories pouvant être données à l'avance et
des paramètres ( 119 ) d'accès spécifiques à des sections du véhicule et spécifiques à des appareils de commande affectés aux objets ( 118 ) informatisés ou à des éléments ( 117 ) de structure de données étant mémorisés dans une base ( 114 ) de données,
- on transforme, par les interfaces ( 113 ) d'instructions, des demandes ( 115 ) d'accès en des paramètres ( 119 ) d'accès spécifiques à des interfaces de véhicule et à des appareils de commande
- à l'aide d'au moins un paramètre ( 119 ) d'accès spécifique aux interfaces de véhicule et aux appareils de commande pour un accès aux paramètres sélectionnés d'appareils de commande, on détermine, par l'interface ( 102 ) de véhicule, au moins une ressource de communication nécessaire d'une interface ( 102 ) de véhicule et un appel ( 120 ) de communication nécessaire,
- l'accès aux paramètres d'appareils de commande sélectionnés s'effectue par l'interface ( 102 ) de véhicule au moyen de la ressource de communication déterminée et de l'appel ( 120 ) de communication déterminé, un accusé de réception d'un appareil de commande du véhicule au système de diagnostic de véhicule étant transformé par l'interface d'instructions en au moins un objet informatisé du système de diagnostic de véhicule,
- à l'aide d'affectations entre des objets ( 118 ) informatisés et des paramètres d'appareil de commande, on détermine, par l'interface ( 113 ) d'instructions, un nombre minimisé d'appels ( 120 ) de communication nécessaires pour un accès à un paramètre d'appareil de commande.

2. Procédé suivant la revendication 1,
dans lequel un objet informatisé est une variable utilisée par une fonction ou par un programme de contrôle du système de diagnostic de véhicule.

3. Procédé suivant l'une des revendications 1 à 2,
dans lequel les éléments de structure de données sont donnés à l'avance d'une manière fixe et indépendamment de paramètres d'accès spécifiques aux interfaces de véhicule et aux appareils de commande.

4. Procédé suivant la revendication 3,
dans lequel les éléments de structure de données sont des métainformations.

5. Procédé suivant l'une des revendications 1 à 4,
dans lequel des paramètres d'accès spécifiques aux interfaces de véhicule et aux appareils de commande sont référencés à partir d'objets informatisés ou d'éléments de structure de données affectés.

6. Procédé suivant l'une des revendications 1 à 5,
dans lequel on détermine, au moyen des éléments de structure de données, des objets informatisés nécessaires pour une fonction ou pour un programme de contrôle du système de diagnostic de véhicule.

7. Programme de commande, qui peut être chargé dans une mémoire de travail d'une unité d'ordinateur et qui a au moins une section de code, qui, lors de sa réalisation, effectue un procédé suivant l'une des revendications 1 à 6, lorsque le programme de commande se déroule dans l'unité d'ordinateur.

8. Système de diagnostic de véhicule comprenant
- un dispositif de commande de déroulement de fonctions ( 111 ) et/ou de programmes ( 112 ) de contrôle,
- une unité de commande de communication de mise à disposition d'une interface ( 113 ) d'instructions pour des fonctions ( 111 ) et/ou pour des programmes ( 112 ) de contrôle,
- des moyens de transmission d'une demande ( 115 ) d'accès à au moins un paramètre d'un appareil de commande sélectionné, qui peut être mémorisée dans un appareil ( 131 à 133 ) de commande de véhicule à l'interface ( 113 ) d'instructions, la demande ( 115 ) d'accès comprenant au moins une indication d'une instruction de commande et une indication d'un objet (118) informatisé du système ( 101 ) de diagnostic de véhicule utilisé par une fonction ( 111 ) et/ou par un programme ( 112 ) de contrôle,
- des moyens d'affectation de l'objet ( 118 ) informatisé à un paramètre d'appareil de commande,
- des éléments ( 117 ) de structure de données pour subdiviser des objets ( 118 ) informatisés du système ( 101 ) de diagnostic de véhicule en des catégories pouvant être données à l'avance,
- une base ( 114 ) de données pour mémoriser des paramètres ( 119 ) d'accès spécifiques aux interfaces de véhicule et aux appareils de commande, qui sont affectés aux objets ( 118 ) informatisés ou aux éléments ( 117 ) de structure de données,
- des moyens englobés par l'interface ( 113 ) d'instructions pour transformer des demandes ( 115 ) d'accès en des paramètres ( 119 ) d'accès spécifiques aux interfaces du véhicule et aux appareils de commande, un accusé de réception d'un appareil de commande du véhicule au système de diagnostic de véhicule étant transformé par l'interface d'instructions en au moins un objet informatisé du système de diagnostic du véhicule,
- des moyens de détermination d'au moins une ressource de communication nécessaire d'une interface ( 102 ) de véhicule et d'un appel ( 120 ) de communication nécessaire par l'interface ( 102 ) de véhicule à l'aide d'au moins un paramètre ( 119 ) d'accès spécifique aux interfaces de véhicule et aux appareils de commande pour un accès aux paramètres d'appareils de commande sélectionnés, l'accès aux paramètres d'appareils de commande sélectionnés s'effectuant par l'interface ( 102 ) de véhicule à l'aide de la ressource de communication déterminée et de l'appel ( 120 ) de communication déterminé,
- des moyens englobés par l'interface ( 113 ) d'instructions pour déterminer un nombre minimisé d'appels ( 120 ) de communication nécessaires à un accès aux paramètres d'appareils de commande au moyen d'affectations entre des objets ( 118 ) informatisés et des paramètres d'appareils de commande.
